# FASCICULE DE BREVET EUROPEEN

(11) **EP 3 872 326 B1**
(45) Date de publication et mention de la délivrance du brevet: **23.11.2022**
(21) Numéro de dépôt: 21157993.3
(22) Date de dépôt: 18.02.2021
(51) Int. Cl.: F02C 7/18, F01D 25/14

(54) **ENSEMBLE PROPULSIF POUR AERONEF COMPORTANT UN SYSTEME DE VENTILATION**
ANTRIEBSEINHEIT FÜR LUFTFAHRZEUG, DIE EIN BELÜFTUNGSSYSTEM UMFASST
PROPULSION ASSEMBLY FOR AIRCRAFT COMPRISING A VENTILATION SYSTEM

(30) Priorité: 25.02.2020 FR 2001823
(43) Date de publication de la demande: 01.09.2021
(73) Titulaire: AIRBUS OPERATIONS, 31060 Toulouse Cedex 9 (FR)
(72) Inventeur: SOMMERER, Yannick, 31060 TOULOUSE (FR); ZEBIAN, Maxime, 31060 TOULOUSE (FR)
(74) Mandataire: Cabinet Le Guen Maillet

(56) Documents cités:
- EP-A1- 2 851 300
- EP-A1- 3 112 605
- EP-A2- 1 148 221

## Description

### DOMAINE TECHNIQUE

La présente invention concerne un ensemble propulsif pour aéronef comprenant deux dispositifs de carénage et un système de ventilation assurant la ventilation de compartiments délimités à l'intérieur de chaque dispositif de carénage.

L'invention concerne également un aéronef équipé d'un tel ensemble propulsif.

### ÉTAT DE LA TECHNIQUE ANTÉRIEURE

Dans l'ensemble de la présente description, les directions « amont » et « aval » sont définies par rapport au sens global de l'écoulement des gaz dans la turbomachine, et les termes « avant » et « arrière » sont à considérer par rapport à une direction F d'avancement de l'aéronef sous l'effet de la poussée exercée par le turboréacteur, cette direction étant parallèle à un axe longitudinal X de l'ensemble propulsif et du turboréacteur.

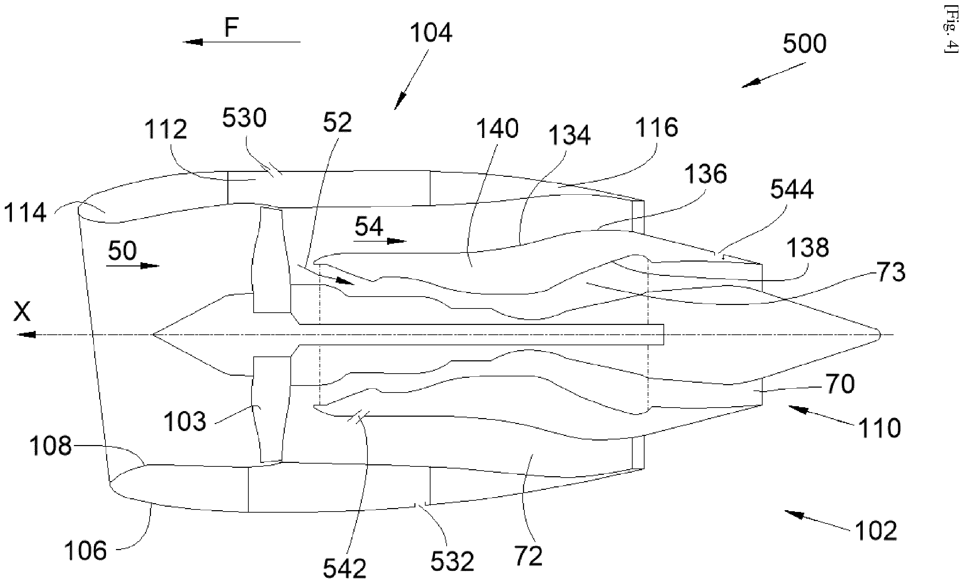

La Fig. 4 montre une section axiale d'un ensemble propulsif 500 de l'état de la technique qui présente un turboréacteur 102 à double flux avec une soufflante 103 et un dispositif de carénage extérieur 104 qui entoure le turboréacteur 102.

Le carénage extérieur 104 comporte une paroi annulaire externe 106 et une paroi annulaire interne 108. La paroi annulaire externe 106 forme un carénage extérieur le long duquel s'écoule l'air extérieur. La paroi annulaire interne 108 canalise un flux d'air entrant 50 alimentant le turboréacteur 102 et qui se divise en aval de la soufflante 103 en un flux primaire 52 et en un flux secondaire 54.

Le flux primaire 52 s'écoule à l'intérieur du cœur 110 qui comporte ici successivement, dans le sens d'écoulement du flux primaire 52, une chambre de compression, une chambre de combustion, et une chambre de turbine. Le flux primaire 52 s'évacue par la tuyère 70.

Le flux secondaire 54 s'écoule autour du cœur 110 dans une veine secondaire 72 et le flux primaire 52 s'écoule à l'intérieur du cœur 110 dans une veine primaire 73.

Les parois annulaires externe 106 et interne 108 délimitent entre-elles un compartiment extérieur 112 du dispositif de carénage extérieur 104, également dénommé « compartiment de soufflante » et qui se positionne entre une manche d'entrée d'air 114 et un inverseur de poussée 116.

Ce compartiment extérieur 112 contient des équipements qui pour certains doivent être ventilés et ainsi maintenus sous une température déterminée.

Pour assurer la ventilation du compartiment extérieur 112 et des équipements éventuellement logés dans celui-ci, le dispositif de carénage extérieur 104 comporte un orifice d'admission d'air 530 ainsi qu'un orifice d'échappement d'air 532 formés dans la paroi annulaire externe 106 du compartiment extérieur 112. Ces deux orifices 530 et 532 sont en général diamétralement opposés par rapport à l'axe longitudinal X. L'orifice d'admission d'air 530 prend généralement la forme d'une écope qui permet l'aspiration de l'air extérieur à l'intérieur du compartiment extérieur 112 et l'orifice d'échappement d'air 532 prend généralement la forme d'un trou qui permet l'aspiration de l'air vers l'extérieur.

Le flux d'air ainsi admis dans le compartiment extérieur 112 forme alors un flux de ventilation circulant dans le compartiment extérieur 112 pour finir par en sortir au travers de l'orifice d'échappement d'air 532 et ainsi ventiler et refroidir l'intérieur du compartiment extérieur 112 et les équipements présents.

Sur l'intérieur, le flux secondaire 54 s'écoule le long d'un dispositif de carénage intérieur 134 comprenant une paroi annulaire externe 136 et une paroi annulaire interne 138 délimitant entre elles un compartiment intérieur 140, couramment dénommé « compartiment de coeur » et la paroi annulaire externe 136 est parfois dénommée «IFS» (« Inner Fixed Structure »).

La veine secondaire 72 est délimitée entre la paroi annulaire externe 136 du carénage intérieur 134 et la paroi annulaire interne 108 du carénage extérieur 104. La veine primaire 73 est délimitée à l'intérieur de la paroi annulaire interne 138 du carénage intérieur 134.

Comme précédemment, le compartiment intérieur 140 doit être ventilé et, à cette fin, la paroi annulaire externe 136 comporte une ou plusieurs fenêtres d'admission d'air 542 et une ou plusieurs fenêtres d'échappement d'air 544 qui sont réparties autour de l'axe longitudinal X. Chaque fenêtre d'admission d'air 542 permet l'admission de l'air du flux secondaire 54 dans le compartiment intérieur 140 et chaque fenêtre d'échappement d'air 544 permet le rejet de l'air du compartiment intérieur 140 vers l'extérieur.

Comme pour les orifices 530 et 532, les fenêtres 542 et 544 prennent par exemple la forme d'écopes ou de trous.

Ce mode de ventilation passif donne de bons résultats. Cependant, en croisière, l'apport d'air frais peut être excessif par rapport aux besoins réels et durant les phases de roulage, l'apport d'air frais peut être insuffisant. Pour répondre à ce dernier point, les orifices peuvent être surdimensionnés ce qui va générer une surventilation des compartiments en vol et engendrer des perturbations autour des orifices en vol et engendrer une consommation supplémentaire de carburant. Le document EP 2851300 A1 divulgue un autre système propulsif pour un aéronef de l'état de la technique.

Il est donc souhaitable de trouver un agencement qui permet d'assurer la ventilation dans les compartiments, tout en optimisant les débits d'admission aux besoins réels de ventilation de chaque phase de vol.

### EXPOSÉ DE L'INVENTION

Un objet de la présente invention est de proposer un ensemble propulsif pour un aéronef qui comporte deux dispositifs de carénage et un système de ventilation assurant la ventilation de compartiments délimités à l'intérieur de chaque dispositif de carénage.

À cet effet, est proposé un ensemble propulsif pour un aéronef et présentant un axe longitudinal et comportant :
- une veine primaire et une veine secondaire,
- un carénage extérieur comportant une paroi annulaire externe et une paroi annulaire interne délimitant entre elles un compartiment extérieur, où la paroi annulaire externe comporte une bouche d'entrée,
- un carénage intérieur comportant une paroi annulaire externe et une paroi annulaire interne délimitant entre elles un compartiment intérieur, où la paroi annulaire externe comporte au moins une fenêtre d'échappement d'air,
   où la veine secondaire est délimitée entre la paroi annulaire interne du carénage extérieur et la paroi annulaire externe du carénage intérieur,
   où la veine primaire est délimitée à l'intérieur de la paroi annulaire interne du carénage intérieur,
   ledit ensemble propulsif étant caractérisé en ce qu'il comporte en outre
- un système d'aspiration comportant une entrée, une sortie et des éléments mobiles prévus pour aspirer de l'air par l'entrée et refouler l'air aspiré par la sortie,
- un moyen d'entraînement prévu pour entraîner les éléments mobiles,
- une canalisation de transfert fluidiquement connectée à la sortie du système d'aspiration,
- une canalisation de distribution disposée dans le compartiment intérieur, fluidiquement connectée à la canalisation de transfert, et comportant une pluralité de buses,
- une canalisation d'apport dont une extrémité débouche dans le compartiment extérieur et dont l'autre extrémité est fluidiquement connectée à l'entrée du système d'aspiration, et
- un moyen de régulation arrangé pour réguler le débit d'air dans le système d'aspiration.

L'air extérieur est alors entraîné par le système d'aspiration et parcourt de manière forcée les deux compartiments.

Selon un mode de réalisation particulier, le moyen de régulation comporte une vanne montée sur la canalisation d'apport.

Selon un autre mode de réalisation particulier, le moyen de régulation comporte une unité de contrôle et des capteurs, où l'unité de contrôle commande le moyen d'entraînement en fonction d'informations délivrées par les capteurs.

Avantageusement, la canalisation de distribution et les buses sont à l'avant du compartiment intérieur et la ou chaque fenêtre d'échappement d'air est à l'arrière du compartiment intérieur.

Avantageusement, la canalisation de distribution prend la forme d'un tore ouvert coaxial avec l'axe longitudinal, et les buses sont distribuées le long du tore et orientées vers l'arrière.

Avantageusement, la bouche d'entrée et l'extrémité de la canalisation d'apport qui débouche dans le compartiment extérieur sont diamétralement opposées par rapport à l'axe longitudinal.

Selon un mode de réalisation particulier, la bouche d'entrée est en partie basse de l'ensemble propulsif et l'extrémité de la canalisation d'apport est en partie haute de l'ensemble propulsif.

Selon un mode de réalisation particulier, la bouche d'entrée est en partie haute de l'ensemble propulsif et l'extrémité ouverte de la canalisation d'apport est disposée en partie basse de l'ensemble propulsif.

Avantageusement, la paroi annulaire externe du compartiment extérieur est percée d'une bouche additionnelle en partie basse de l'ensemble propulsif.

L'invention propose également un aéronef comportant au moins un ensemble propulsif selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un ensemble propulsif selon l'invention,
[Fig. 2] est une coupe axiale d'un ensemble propulsif selon un premier mode de réalisation de l'invention,
[Fig. 3] est une coupe axiale d'un ensemble propulsif selon un deuxième mode de réalisation de l'invention, et
[Fig. 4] est une coupe axiale d'un ensemble propulsif de l'état de la technique.

### EXPOSÉ DÉTAILLÉ DE MODES DE RÉALISATION

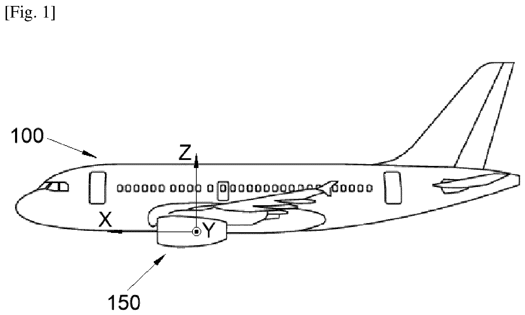

La Fig. 1 montre un aéronef 100 qui présente un ensemble propulsif 150 selon l'invention qui comporte un turboréacteur double flux.

Dans la description qui suit, et par convention, on appelle X la direction longitudinale de l'ensemble propulsif et du turboréacteur orientée positivement dans le sens d'avancement de l'aéronef 100, on appelle Y la direction transversale de l'ensemble propulsif et du turboréacteur qui est horizontale lorsque l'aéronef est au sol, et Z la direction verticale ou hauteur verticale lorsque l'aéronef est au sol, ces trois directions X, Y et Z étant orthogonales entre elles.

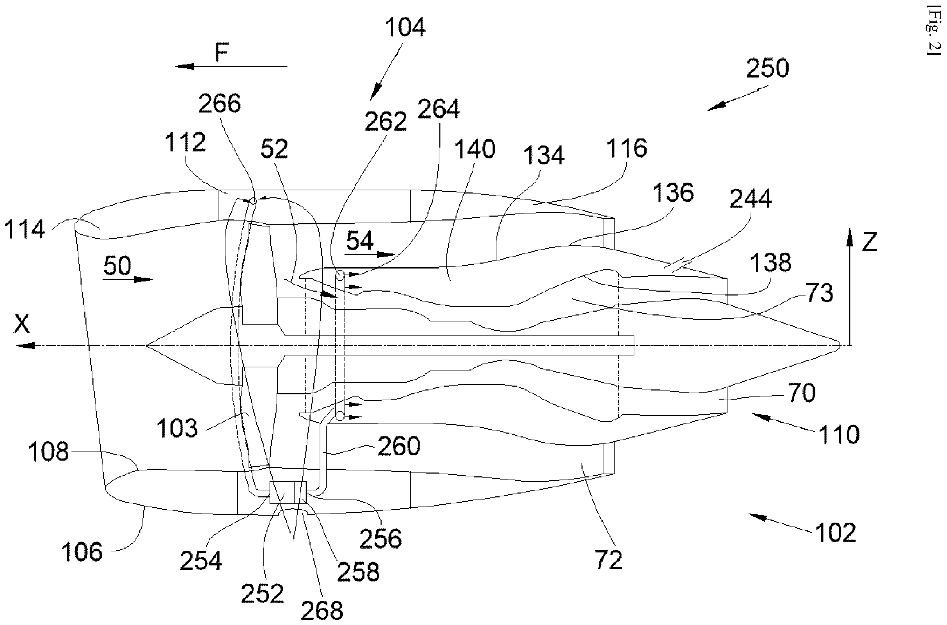

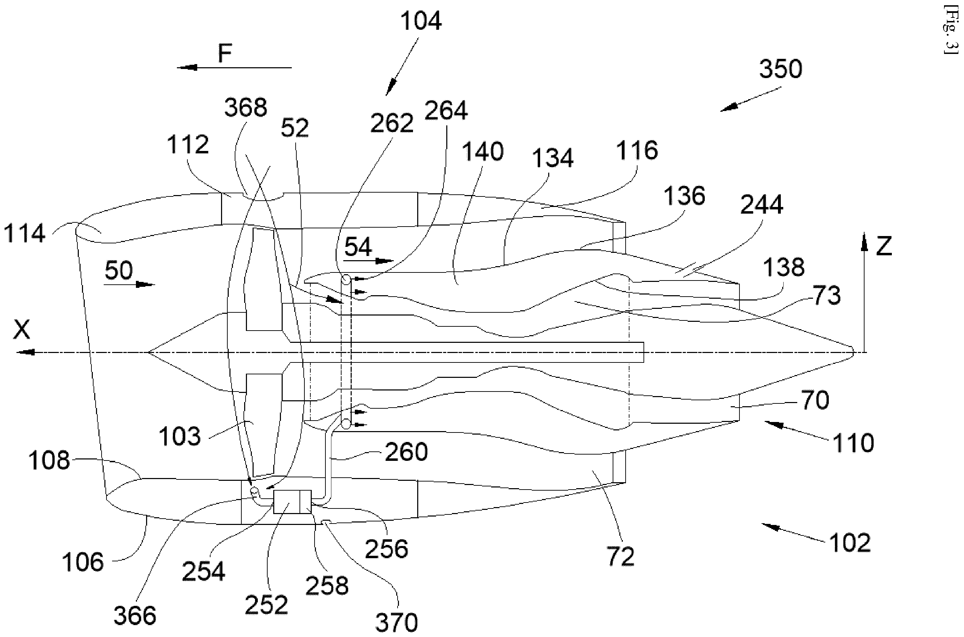

La Fig. 2 montre un ensemble propulsif 250 selon un premier mode de réalisation de l'invention et la Fig. 3 montre un ensemble propulsif 350 selon un deuxième mode de réalisation de l'invention.

L'ensemble propulsif 250, 350 selon l'invention est similaire à l'ensemble propulsif 500 de l'état de la technique et les éléments communs à l'ensemble propulsif 500 de la Fig. 4 et aux ensembles propulsifs 250 et 350 selon l'invention portent les mêmes références.

L'ensemble propulsif 250, 350 comporte un système d'aspiration 252 comportant une entrée 254 et une sortie 256 et des éléments mobiles, comme par exemple les pales d'une pompe ou d'un compresseur, qui sont prévus, lorsqu'ils se déplacent, pour aspirer l'air par l'entrée 254 et refouler l'air aspiré par la sortie 256.

L'ensemble propulsif 250, 350 comporte également un moyen d'entraînement 258 qui entraîne en mouvement les éléments mobiles et ainsi faire fonctionner le système d'aspiration 252, c'est-à-dire qui le fait aspirer et refouler l'air. Ce moyen d'entraînement 258 est par exemple un moteur électrique ou une boîte de vitesse reliant par des arbres de transmission un rotor du turboréacteur 102 aux éléments mobiles.

L'ensemble propulsif 250, 350 comporte également une canalisation de transfert 260 fluidiquement connectée à la sortie 256 du système d'aspiration 252.

L'ensemble propulsif 250, 350 comporte également une canalisation de distribution 262 qui est disposée dans le compartiment intérieur 140 et qui est fluidiquement connectée à la canalisation de transfert 260. La canalisation de distribution 262 comporte une pluralité de buses 264 permettant la sortie de l'air de la canalisation de distribution 262 vers l'intérieur du compartiment intérieur 140.

La paroi annulaire externe 136 du compartiment intérieur 140 comporte au moins une fenêtre d'échappement d'air 244 en liaison entre le compartiment intérieur 140 et l'extérieur et qui permet le rejet de l'air du compartiment intérieur 140 vers l'extérieur. Ainsi, l'air qui arrive par les buses 264 traverse le compartiment intérieur 140 et sort par la fenêtre d'échappement d'air 244.

L'ensemble propulsif 250, 350 comporte également une canalisation d'apport 266, 366 dont une extrémité débouche dans le compartiment extérieur 112 et dont l'autre extrémité est fluidiquement connectée à l'entrée 254 du système d'aspiration 252.

L'ensemble propulsif 250, 350 comporte également une bouche d'entrée 268, 368 qui traverse la paroi annulaire externe 106 du compartiment extérieur 112 pour permettre l'introduction de l'air extérieur dans ledit compartiment extérieur 112. La bouche d'entrée 268, 368 est en liaison entre le compartiment extérieur 112 et l'extérieur.

Ainsi, lorsque le système d'aspiration 252 est en fonctionnement, il crée une dépression dans le compartiment extérieur 112 ce qui oblige l'air extérieur à pénétrer dans ledit compartiment extérieur 112 par la bouche d'entrée 268, 368. L'air pénètre alors dans la canalisation d'apport 266, 366 pour traverser le système d'aspiration 252 et être expulsé vers la canalisation de distribution 262 puis le compartiment intérieur 140 où l'air sort vers l'extérieur par la fenêtre d'échappement d'air 244.

Pour réguler le débit d'air, l'ensemble propulsif 250, 350 comporte un moyen de régulation qui régule le débit d'air dans le système d'aspiration 252.

Selon un mode de réalisation particulier, le moyen de régulation peut être passif et prendre par exemple la forme d'une vanne montée sur la canalisation d'apport 266, 366 et qui fonctionne en ouverture/fermeture en fonction de la pression dans ladite canalisation d'apport 266, 366. Selon un autre exemple de réalisation, le moyen de régulation peut être un caloduc associé à un système de régulation mécanique, du type vanne, où le caloduc transporte une information de température d'au moins un des compartiments 112, 140 au système de régulation mécanique.

Selon un autre mode de réalisation particulier, le moyen de régulation peut être actif et il prend la forme d'une unité de contrôle et de capteurs, où l'unité de contrôle commande le moyen d'entraînement 258 pour accélérer ou ralentir les éléments mobiles du système d'aspiration 252 en fonction des besoins de l'aéronef 100, et en particulier, en fonction d'informations, en particulier d'informations de température, délivrées par les capteurs répartis dans l'ensemble propulsif 150, 250, 350.

La ventilation forcée créée par la présence du système d'aspiration 252 peut ainsi être régulée en fonction des besoins de l'aéronef 100. En outre, dans la mesure où la ventilation est forcée, la bouche d'entrée 268, 368 n'a pas besoin de prendre la forme d'une écope, et il peut s'agir uniquement d'un trou qui reste à fleur de la paroi annulaire externe 106 et n'engendre qu'une traînée supplémentaire très limitée. En outre, un seul système d'aspiration permet de ventiler et refroidir les deux compartiments.

Dans le cas d'un moyen de régulation actif, l'ensemble propulsif 150 peut ainsi comporter par exemple au moins un capteur de température qui mesure la température d'un équipement à surveiller dans le compartiment intérieur 140 ou le compartiment extérieur 112 et qui est en liaison avec l'unité de contrôle et selon un seuil de température prédéfini, l'unité de contrôle va commander le moyen d'entraînement 258 pour accélérer ou ralentir le système d'aspiration 252.

L'unité de contrôle comprend par exemple, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage, tel qu'un lecteur de cartes SD (« Secure Digital » en anglais) ; au moins une interface de communication, permettant à l'unité de contrôle de communiquer entre autres avec le système d'aspiration 252 et les capteurs.

Le processeur CPU est capable d'exécuter des instructions chargées dans la mémoire RAM à partir de la mémoire ROM, d'une mémoire externe (non représentée), d'un support de stockage (tel qu'une carte SD), ou d'un réseau de communication (non représenté). Lorsque le contrôleur C est mis sous tension, le processeur CPU est capable de lire de la mémoire RAM des instructions et de les exécuter. Ces instructions forment un programme d'ordinateur causant l'implémentation, par le processeur CPU, de tout ou partie de l'algorithme et des étapes décrites ici.

Afin d'assurer un meilleur brassage de l'air dans le compartiment extérieur 112, la bouche d'entrée 268, 368 et l'extrémité ouverte de la canalisation d'apport 266, 366 qui débouche dans le compartiment extérieur 112 sont diamétralement opposées par rapport à l'axe longitudinal X. Ainsi, l'air qui pénètre par la bouche d'entrée 268, 368 doit parcourir la moitié du compartiment extérieur 112, pour une partie du flux d'air par bâbord, et pour une autre partie du flux par tribord, pour rejoindre l'extrémité de la canalisation d'apport 266, 366.

Dans le mode de réalisation de la Fig. 2, la bouche d'entrée 268 est en partie basse de l'ensemble propulsif 250 et l'extrémité ouverte de la canalisation d'apport 266 est disposée en partie haute de l'ensemble propulsif 250.

La bouche d'entrée 268 peut ainsi servir également d'ouverture de drainage pour évacuer les liquides qui pourraient se trouver dans le compartiment extérieur 112.

Dans ce mode de réalisation, le système d'aspiration 252 est en partie basse du compartiment extérieur 112 et la canalisation d'apport 266 parcourt alors la moitié du compartiment extérieur 112.

Dans le mode de réalisation de la Fig. 3, la bouche d'entrée 368 est en partie haute de l'ensemble propulsif 350 et l'extrémité ouverte de la canalisation d'apport 366 est disposée en partie basse de l'ensemble propulsif 350.

En partie basse de l'ensemble propulsif 350, une bouche additionnelle 370 est alors prévue à travers la paroi annulaire externe 106 du compartiment extérieur 112 pour assurer le drainage de liquides qui pourraient se trouver dans le compartiment extérieur 112.

Dans ce mode de réalisation, le système d'aspiration 252 est en partie basse du compartiment extérieur 112 et la canalisation d'apport 366 est relativement courte.

Pour faciliter la circulation de l'air dans le compartiment intérieur 140, la canalisation de distribution 262 et les buses 264 sont à l'avant du compartiment intérieur 140 et la ou chaque fenêtre d'échappement d'air 244 est à l'arrière du compartiment intérieur 140.

Dans le mode de réalisation de l'invention présenté sur les Figs. 2 et 3, la canalisation de distribution 262 prend la forme d'un tore ouvert coaxial avec l'axe longitudinal X, et les buses 264 sont distribuées le long du tore et orientées vers l'arrière pour éjecter l'air vers l'arrière du compartiment intérieur 140.

Dans le mode de réalisation de l'invention présenté sur les Figs. 2 et 3, le système d'aspiration 252 est arrangé dans le compartiment extérieur 112 mais il pourrait être disposé ailleurs comme par exemple dans le compartiment intérieur 140.

## Revendications

1. Ensemble propulsif (150, 250, 350) pour un aéronef (100) et présentant un axe longitudinal (X) et comportant :
- une veine primaire (73) et une veine secondaire (72),
- un carénage extérieur (104) comportant une paroi annulaire externe (106) et une paroi annulaire interne (108) délimitant entre elles un compartiment extérieur (112), où la paroi annulaire externe (106) comporte une bouche d'entrée (268, 368),
- un carénage intérieur (134) comportant une paroi annulaire externe (136) et une paroi annulaire interne (138) délimitant entre elles un compartiment intérieur (140), où la paroi annulaire externe (136) comporte au moins une fenêtre d'échappement d'air (244),
où la veine secondaire (72) est délimitée entre la paroi annulaire interne (108) du carénage extérieur (104) et la paroi annulaire externe (136) du carénage intérieur (134),
où la veine primaire (73) est délimitée à l'intérieur de la paroi annulaire interne (138) du carénage intérieur (134),
ledit ensemble propulsif (150, 250, 350) étant **caractérisé en ce qu'**il comporte en outre :
- un système d'aspiration (252) comportant une entrée (254), une sortie (256) et des éléments mobiles prévus pour aspirer de l'air par l'entrée (254) et refouler l'air aspiré par la sortie (256),
- un moyen d'entraînement (258) prévu pour entraîner les éléments mobiles,
- une canalisation de transfert (260) fluidiquement connectée à la sortie (256) du système d'aspiration (252),
- une canalisation de distribution (262) disposée dans le compartiment intérieur (140), fluidiquement connectée à la canalisation de transfert (260), et comportant une pluralité de buses (264),
- une canalisation d'apport (266, 366) dont une extrémité débouche dans le compartiment extérieur (112) et dont l'autre extrémité est fluidiquement connectée à l'entrée (254) du système d'aspiration (252), et
- un moyen de régulation arrangé pour réguler le débit d'air dans le système d'aspiration (252).

2. Ensemble propulsif (150, 250, 350) selon la revendication 1, **caractérisé en ce que** le moyen de régulation comporte une vanne montée sur la canalisation d'apport (266, 366).

3. Ensemble propulsif (150, 250, 350) selon la revendication 1, **caractérisé en ce que** le moyen de régulation comporte une unité de contrôle et des capteurs, où l'unité de contrôle commande le moyen d'entraînement (258) en fonction d'informations délivrées par les capteurs.

4. Ensemble propulsif (150, 250, 350) selon l'une des revendications 1 à 3, **caractérisé en ce que** la canalisation de distribution (262) et les buses (264) sont à l'avant du compartiment intérieur (140) et **en ce que** la ou chaque fenêtre d'échappement d'air (244) est à l'arrière du compartiment intérieur (140).

5. Ensemble propulsif (150, 250, 350) selon la revendication 4, **caractérisé en ce que** la canalisation de distribution (262) prend la forme d'un tore ouvert coaxial avec l'axe longitudinal (X), et **en ce que** les buses (264) sont distribuées le long du tore et orientées vers l'arrière.

6. Ensemble propulsif (150, 250, 350) selon l'une des revendications 1 à 5, **caractérisé en ce que** la bouche d'entrée (268, 368) et l'extrémité de la canalisation d'apport (266, 366) qui débouche dans le compartiment extérieur (112) sont diamétralement opposées par rapport à l'axe longitudinal (X).

7. Ensemble propulsif (250) selon la revendication 6, **caractérisé en ce que** la bouche d'entrée (268) est en partie basse de l'ensemble propulsif (250) et **en ce que** l'extrémité de la canalisation d'apport (266) est en partie haute de l'ensemble propulsif (250).

8. Ensemble propulsif (350) selon la revendication 6, **caractérisé en ce que** la bouche d'entrée (368) est en partie haute de l'ensemble propulsif (350) et **en ce que** l'extrémité ouverte de la canalisation d'apport (366) est disposée en partie basse de l'ensemble propulsif (350).

9. Ensemble propulsif (350) selon la revendication 8, **caractérisé en ce que** la paroi annulaire externe (106) du compartiment extérieur (112) est percée d'une bouche additionnelle (370) en partie basse de l'ensemble propulsif (350).

10. Aéronef (100) comportant au moins un ensemble propulsif (150, 250, 350) selon l'une des revendications précédentes.

## Patentansprüche

1. Antriebseinheit (150, 250, 350) für ein Luftfahrzeug (100), welche eine Längsachse (X) aufweist und umfasst:
- einen Primärstromkanal (73) und einen Sekundärstromkanal (72),
- eine Außenverkleidung (104), die eine ringförmige Außenwand (106) und eine ringförmige Innenwand (108) umfasst, die zwischen sich eine äußere Kammer (112) begrenzen, wobei die ringförmige Außenwand (106) eine Eintrittsöffnung (268, 368) umfasst,
- eine Innenverkleidung (134), die eine ringförmige Außenwand (136) und eine ringförmige Innenwand (138) umfasst, die zwischen sich eine innere Kammer (140) begrenzen, wobei die ringförmige Außenwand (136) mindestens ein Luftauslassfenster (244) umfasst,
wobei der Sekundärstromkanal (72) zwischen der ringförmigen Innenwand (108) der Außenverkleidung (104) und der ringförmigen Außenwand (136) der Innenverkleidung (134) begrenzt wird,
wobei der Primärstromkanal (73) im Inneren der ringförmigen Innenwand (138) der Innenverkleidung (134) begrenzt wird,
wobei die Antriebseinheit (150, 250, 350) **dadurch gekennzeichnet ist, dass** sie außerdem umfasst:
- ein Ansaugsystem (252), das einen Einlass (254), einen Auslass (256) und bewegliche Elemente, die dafür vorgesehen sind, Luft über den Einlass (254) anzusaugen und die angesaugte Luft über den Auslass (256) auszustoßen, umfasst,
- ein Antriebsmittel (258), das dafür vorgesehen ist, die beweglichen Elemente anzutreiben,
- eine Transferleitung (260), die mit dem Auslass (256) des Ansaugsystems (252) fluidisch verbunden ist,
- eine Verteilungsleitung (262), die in der inneren Kammer (140) angeordnet ist, mit der Transferleitung (260) fluidisch verbunden ist und mehrere Düsen (264) umfasst,
- eine Zufuhrleitung (266, 366), von der ein Ende in die äußere Kammer (112) mündet und deren anderes Ende mit dem Einlass (254) des Ansaugsystems (252) fluidisch verbunden ist, und
- ein Reguliermittel, das dazu eingerichtet ist, den Luftdurchsatz im Ansaugsystems (252) zu regulieren.

2. Antriebseinheit (150, 250, 350) nach Anspruch 1, **dadurch gekennzeichnet, dass** das Reguliermittel ein Ventil umfasst, das an der Zufuhrleitung (266, 366) angebracht ist.

3. Antriebseinheit (150, 250, 350) nach Anspruch 1, **dadurch gekennzeichnet, dass** das Reguliermittel eine Steuereinheit und Sensoren umfasst, wobei die Steuereinheit das Antriebsmittel (258) in Abhängigkeit von Informationen steuert, die von den Sensoren geliefert werden.

4. Antriebseinheit (150, 250, 350) nach einem der Ansprüche 1 bis 3, **dadurch gekennzeichnet, dass** die Verteilungsleitung (262) und die Düsen (264) sich vorn an der inneren Kammer (140) befinden, und dadurch, dass das oder jedes Luftauslassfenster (244) sich hinten an der inneren Kammer (140) befindet.

5. Antriebseinheit (150, 250, 350) nach Anspruch 4, **dadurch gekennzeichnet, dass** die Verteilungsleitung (262) die Form eines offenen Torus annimmt, der mit der Längsachse (X) koaxial ist, und dadurch, dass die Düsen (264) entlang des Torus verteilt und nach hinten gerichtet sind.

6. Antriebseinheit (150, 250, 350) nach einem der Ansprüche 1 bis 5, **dadurch gekennzeichnet, dass** die Eintrittsöffnung (268, 368) und das Ende der Zufuhrleitung (266, 366), das in die äußere Kammer (112) mündet, einander bezüglich der Längsachse (X) diametral gegenüberliegen.

7. Antriebseinheit (250) nach Anspruch 6, **dadurch gekennzeichnet, dass** sich die Eintrittsöffnung (268) im unteren Teil der Antriebseinheit (250) befindet, und dadurch, dass sich das Ende der Zufuhrleitung (266) im oberen Teil der Antriebseinheit (250) befindet.

8. Antriebseinheit (350) nach Anspruch 6, **dadurch gekennzeichnet, dass** sich die Eintrittsöffnung (368) im oberen Teil der Antriebseinheit (350) befindet, und dadurch, dass sich das offene Ende der Zufuhrleitung (366) im unteren Teil der Antriebseinheit (350) befindet.

9. Antriebseinheit (350) nach Anspruch 8, **dadurch gekennzeichnet, dass** die ringförmige Außenwand (106) der äußeren Kammer (112) eine zusätzliche Öffnung (370) im unteren Teil der Antriebseinheit (350) aufweist.

10. Luftfahrzeug (100), welches mindestens eine Antriebseinheit (150, 250, 350) nach einem der vorhergehenden Ansprüche umfasst.

## Claims

1. Propulsion assembly (150, 250, 350) for an aircraft (100), having a longitudinal axis (X) and having:
- a primary duct (73) and a secondary duct (72),
- an outer fairing (104) having an external annular wall (106) and an internal annular wall (108) that delimit between them an outer compartment (112), wherein the external annular wall (106) has an inlet opening (268, 368),
- an inner fairing (134) having an external annular wall (136) and an internal annular wall (138) that delimit between them an inner compartment (140), wherein the external annular wall (136) has at least one air exhaust aperture (244),
wherein the secondary duct (72) is delimited between the internal annular wall (108) of the outer fairing (104) and the external annular wall (136) of the inner fairing (134),
wherein the primary duct (73) is delimited inside the internal annular wall (138) of the inner fairing (134),
said propulsion assembly (150, 250, 350) being **characterized in that** it also has:
- a suction system (252) having an inlet (254), an outlet (256) and mobile elements that are designed to draw air in via the inlet (254) and deliver the drawn-in air via the outlet (256),
- a drive means (258) designed to drive the mobile elements,
- a transfer pipe (260) fluidically connected to the outlet (256) of the suction system (252),
- a distribution pipe (262) disposed in the inner compartment (140), fluidically connected to the transfer pipe (260) and having a plurality of nozzles (264),
- a supply pipe (266, 366) of which one end opens into the outer compartment (112) and of which the other end is fluidically connected to the inlet (254) of the suction system (252), and
- a regulating means arranged so as to regulate the flow rate of air in the suction system (252).

2. Propulsion assembly (150, 250, 350) according to Claim 1, **characterized in that** the regulating means has a valve mounted on the supply pipe (266, 366).

3. Propulsion assembly (150, 250, 350) according to Claim 1, **characterized in that** the regulating means has a control unit and sensors, wherein the control unit instructs the drive means (258) according to information delivered by the sensors.

4. Propulsion assembly (150, 250, 350) according to one of Claims 1 to 3, **characterized in that** the distribution pipe (262) and the nozzles (264) are at the front of the inner compartment (140) and **in that** the or each air exhaust aperture (244) is at the rear of the inner compartment (140).

5. Propulsion assembly (150, 250, 350) according to Claim 4, **characterized in that** the distribution pipe (262) takes the form of a ring torus coaxial with the longitudinal axis (X), and **in that** the nozzles (264) are distributed along the torus and oriented towards the rear.

6. Propulsion assembly (150, 250, 350) according to one of Claims 1 to 5, **characterized in that** the inlet opening (268, 368) and the end of the supply pipe (266, 366) that opens into the outer compartment (112) are diametrically opposite one another relative to the longitudinal axis (X).

7. Propulsion assembly (250) according to Claim 6, **characterized in that** the inlet opening (268) is in the bottom part of the propulsion assembly (250) and **in that** the end of the supply pipe (266) is in the top part of the propulsion assembly (250).

8. Propulsion assembly (350) according to Claim 6, **characterized in that** the inlet opening (368) is in the top part of the propulsion assembly (350) and **in that** the open end of the supply pipe (366) is disposed in the bottom part of the propulsion assembly (350).

9. Propulsion assembly (350) according to Claim 8, **characterized in that** the external annular wall (106) of the outer compartment (112) has an additional opening (370) passing through it in the bottom part of the propulsion assembly (350).

10. Aircraft (100) having at least one propulsion assembly (150, 250, 350) according to one of the preceding claims.
